Europäisches Patentamt

European Patent Office

Office européen des brevets

(11) Publication number: **0 265 560**
**A1**

## (12) EUROPEAN PATENT APPLICATION

(21) Application number: **86201895.9**

(22) Date of filing: **29.10.86**

(51) Int. Cl.4 **G01B 11/00 , B07C 5/00**

(43) Date of publication of application:
**04.05.88 Bulletin 88/18**

(84) Designated Contracting States:
**AT BE CH DE FR GB LI LU NL SE**

(71) Applicant: **Stagnaro, Sergio**
**Via Garibaldi, 29/6**
**I-16043 Chiavari (Genova)(IT)**

(72) Inventor: **Stagnaro, Sergio**
**Via Garibaldi, 29/6**
**I-16043 Chiavari (Genova)(IT)**

(74) Representative: **Raimondi, Alfredo, Dott. Ing.**
**Prof. et al**
**Studio Tecnico Consulenza Brevetti Piazzale**
**Cadorna 15**
**I-20123 Milano(IT)**

(54) **Apparatus and method detecting geometrical quantities of objects and automatic identifying of the same.**

(57) The present invention concerns an apparatus and method detecting geometrical quantities of objects and automatic identifying of the same comprising at least one array (1) of sensors, formed to provide an aperture through which there travels an object to be identified, such aperture being provided with a number of sensors (9) and (11), arranged along two directions substantially at right angles within the plane of the aperture itself, able to detect the presence of an object (2) moving along their operating paths, such sensors being connected via an addressing unit (3) and an interface unit (4) to a computer controlled by a microprocessor (5) able to order that, at successive stages, as the object (2) passes through the aperture, detections are carried out related to the number and the position of the array of sensors detecting the object, and to work out, from the data gathered, resultant quantities to be sent on and/or to be compared with corresponding quantities stored in its memory related to a number of known objects belonging to various classes of objects, to one of which the object under investigation has to be attributed, the apparatus being able, depending on the result of the finding, to trigger outside units into operation.

Fig. 1

## Apparatus and method detecting geometrical quantities of objects and automatic identifying of the same.

In many applications there is a need for automatically identifying different objects so as to be able to automatically select different operations to be carried out on such objects.

To this purpose, many methods and apparatuses can be used depending on the possible classes of objects under investigation, such as for instance weight assessment, maximum bulk and the like.

However, under certain conditions, the objects have to be detected from their shapes or from quantities relating thereto, without any physical contact with the objects themselves; in such cases the position of the objects involved is particularly important because, being often entirely coincidental, it causes difficulty in comparing the obtained image with the sample images of possible objects, especially in the case of objects having complicated shapes or of non rigid objects.

These difficulties make a detecting apparatus comprising, as a rule, a television camera for observing the object and a high performance computer able to carry out the logical operations involved in the detection step, particularly complex and costly, therefore in many cases the use of such equipment is not economical and a further limitation is the time factor involved in detecting objects by means of such systems.

Therefore, there is scope for evolving an apparatus, able to detect geometrical quantities of objects and to automatically identify them without any need for physical contact, which is structurally simple and is suitable to be controlled by a limited capability computer, not too highly priced and able to offer a performance which suits the operating features of the automatic installations for which it is meant.

These results are achieved by the present invention which provides an apparatus for detecting the geometrical quantities of objects and for automatically identifying them, including at least one array of sensors formed to provide an aperture within which the object to be detected is placed, relative movement being possible between the object and the aperture, the aperture comprising a number of sensors, arranged along two directions substantially at right angles to one another within the plane of the aperture itself, able to detect the presence of an object moving along its operating path, such sensors being connected by means of an addressing unit and an interface unit to a computer controlled by a microprocessor which is able to order the carrying out of detections at successive stages as the object goes through the aperture, the detections being related to the number and the position of the array of sensors detecting the object, and to work out, from the data gathered, the resultant quantities to be used directly as the object quantities, the said microprocessor also being able to compare the above quantities with corresponding quantities stored in its memory and related to a number of known objects belonging to various classes of objects, to one of which the object under examination has to be attributed, and, depending on the result of the finding, to trigger outside units into operation.

In more detail, the array of sensors consists of a frame forming a substantially rectangular window or aperture, along two contiguous sides of which there are two fairly closely spaced rows of emitters, in a position relative to two reference axes in the plane of the frame, these rows of emitters each being faced on the respective opposite sides of the window, by a respective row of receivers, whereby each sensor arrangement, consisting of an emitter and its corresponding receiver in line with each other, sends different signals to said interface unit depending on the presence or absence of an object on the path linking the emitter and receiver of each sensor arrangement.

The sensor arrangements can also be of the reflecting type combining the receiver and emitter in one unit, and in this case the sensors are positioned only along two contiguous sides of said window.

The above mentioned addressing unit comprises at least one multichannel demultiplexer linked to the said receivers and to the said interface unit for sequentially detecting the signals from the receivers; additionally, the addressing unit can also include a multichannel multiplexer linked to the said emitters and to the interface unit for sequentially activating the emitters in correspondence with their respective receivers; alternatively, the emitters may be activated simultaneously by a continuous current feeder.

The interface unit comprises an integrated circuit peripheral interface adaptor linked to said control processor by a data bus, an address bus and a control bus, and linked to said addressing unit via a data bus and an address bus connected to the multichannel multiplexer, it being possible for the address bus also to be linked to said multichannel multiplexer.

Conveniently, the data bus and the address bus coupled to said addressing unit can be equipped with amplifier-separators (buffers) for signal amplification.

The computer controls that detections are carried out at frequent intervals during the time the object travels through the array.

The detections ordered by the computer may be carried out either at regular intervals or, according to an alternative embodiment, in the case of objects going through the array at different speeds, two successive arrays of sensors can be provided at a pre-established distance from each other, in which case the interval of time between detection of the object by the first array and the corresponding detection by the second array is used to work out the value of the transit speed of the object and to determine the frequency at which the successive detections of the object by the second array are to be carried out.

Should the object be carried through the array by a conveyor or similar devices, these may be used in conjunction with an impulse generator unit whose frequency is equal or proportional to the speed of advancement of the conveyors, this generator being linked to the interface unit circuits generating the signals, whereby a detection is carried out at a frequency proportional to the frequency of said impulse generator unit.

Suitably, the time gap between two successive detections of a moving object by the array of sensors is such, in relation to the speed of travel of the object, to involve sections that are substantially at the same distance from each other as two contiguous sensors on said window.

In order to ensure a high reliability of operation, the window consists of a frame of metal that is not easily deformable to whose sides the emitters and receivers of said sensors are rigidly secured.

The method for detecting geometrical quantities of objects and for automatically identifying them according to the invention, provides for the object to be detected to pass through an array of sensors able to carry out a sequence of detections in the time it takes for the object to pass through, the results of such detections being then processed to provide quantities related thereto; these quantities can be used as such directly or be used to identify the objects and/or their positions, by comparing them to corresponding quantities stored in the memory referring to identical detections previously carried out on a number of known objects for each of the classes to which the object being investigated may belong, according to statistical rules chosen on the basis of the specific application involved, so that the object under examination may be attributed to one of such classes.

More details are given in the following description, with reference to the attached drawings wherein:

Fig. 1 is a general diagram block of the apparatus in one of its embodiments;

Fig. 2 is a diagram for use in detecting an object;

Fig. 3 is a diagram for use in detecting an object using a double array of sensors;

Fig. 4 is an embodiment of a pair of emitter and receiver;

Fig. 5 is a view in a direction V of Fig. 4;

Fig. 6 is an alternative embodiment of Fig. 5;

Fig. 7 is a block diagram of an alternative embodiment of the apparatus according to the invention

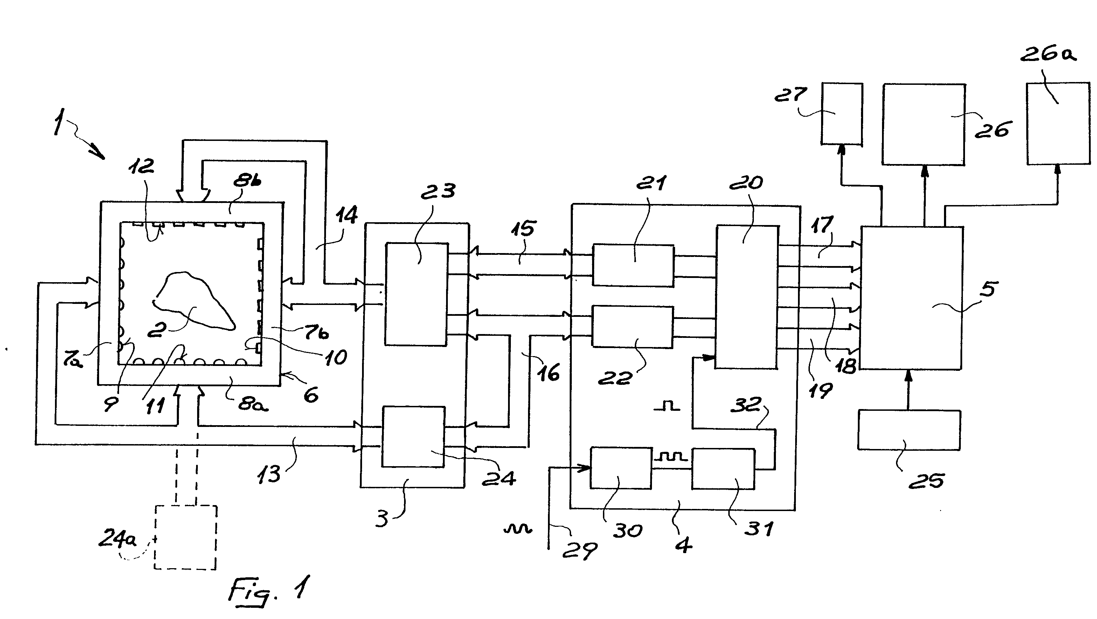

As shown in Fig. 1, the apparatus according to the invention comprises an array 1 of sensors inside which there is a relatively moving object 2 to be detected, this array being connected, via a logic addressing unit 3 and an interface unit 4, to a microprocessor logic control unit 5.

The array 1 of sensors comprises a frame 6, suitably rectangular or square in shape, on whose opposite lateral sides 7a, 7b, 8a and 8b the sensors are housed, each respectively consisting of a number of horizontal emitters 9 and corresponding receivers 10, and of a number of vertical emitters 11 and corresponding receivers 12, suitably arranged to detect the presence of an object in the field to be explored within the frame 6.

Two contiguous sides of frame 6, i.e. 7a and 8a, are defined by a pair of Cartesian axes y, x corresponding to the emitters 9 and 11 and their respective receivers 10 and 12.

These emitters and receivers can be of various types depending on the features of the application considered, for instance optical, acoustic, inductive, capacitative, laser or others and are such that the signal originating from an emitter is received by the corresponding receiver except for those pairs of emitters and receivers whose coupling path is intercepted by the object within frame 6.

The addressing unit 3 is coupled via the bus 13 and the bus 14 to the emitters and the receivers respectively; and via the data bus 15 and the address bus 16 to the interface unit 4.

The interface unit 4 is connected to a control microprocessor unit 5 by means of a data bus 17, and address bus 18 and a control bus 19, respectively.

In more detail, the interface unit 4 comprises a peripheral interface adaptor 20, to which the data bus 15 and the address bus 16 are connected through the amplifier-separators (buffers) 21, 22 respectively, for amplifying the received signal.

The addressing unit 3 comprises a multi-channel demultiplexer 23 to which there are connected the data bus 15, the address bus 16 and bus 14 which is connected to the receivers. The address bus 16 can be connected to a multi-channel multiplexer 24, to which bus 13 is connected, in order to feed the emitters in sequence; should the emitters have to be activated simultaneously, a continuous current feeder 24A is provided, shown in the figure by a broken line, in order to feed the emitters.

The control microprocessor 5 is equipped with a keyboard 25, a display 26 and an output unit 27 able to control outside equipment depending on the identification made; there is also provided a mass memory unit 26A which memorises the identification data.

The control processor 5 orders the carrying out of the detection of the data supplied by the array of sensors 1 at successive times: this can be carried out at a regular rate, pre-established depending on the use which is made of the apparatus, or at a pre-calculated rate, for instance when the objects to be identified travel through the array at different speeds.

The result of the readings carried out by the sensors is determined, for each Cartesian axis, x, y, by the number of receivers detecting the object and by the distribution of the receivers within the frame 6: generally speaking this result corresponds to the section of the object under investigation which is identified by the plane containing the sensors, together with information referring to the area, the shape and the position of the object within the plane.

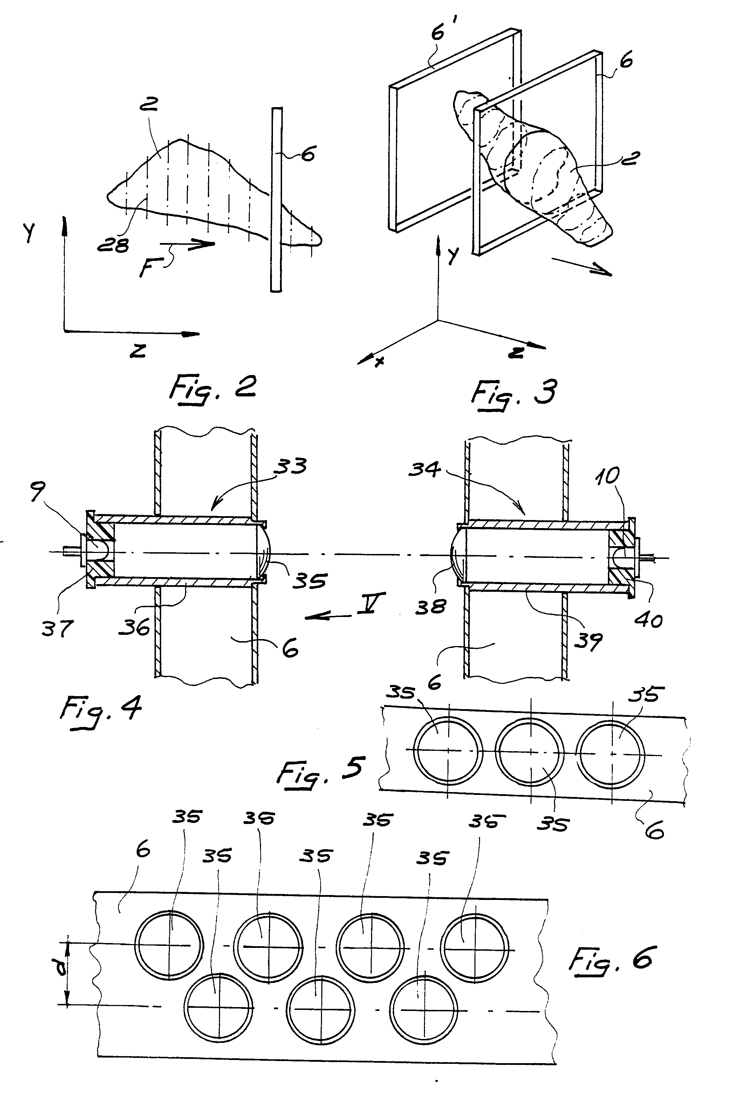

When the object 2 travels within frame 6 moving in the direction indicated by arrow F of Figure 2, that is in the direction of reference axis z, successive detections are carried out, as mentioned above, corresponding to the subsequent sections 28 of the object, as shown in Figure 2 by dot and dash broken lines.

The detections carried out at successive times provide a collection of data, referring to volume, shape, position and orientation of the object passing through the array, which is sent to the control processor 5 either to be used straight away as such when only the recording of the data is required, or to be statistically compared with data which is stored in the memory and which relates to different possible objects, in order to be able to establish to which group the detected object belongs.

The data stored in the memory derive from the results of several detections carried out on known objects going through the array in a casual way, which are processed according to statistical rules in order to supply an assessment as correct as possible of the findings referring to the object to be detected or of its position, orientation, etc.

From the data gathered for each object passing through the array, several significant measurements can be obtained, for instance the length of the object calculated from the number of readings obtained between the first and the last detection of the object within the array, its approximate volume, the coordinates of its centre of gravity, its maximum height and width, its maximum cross-section, the average height and width, the average slopes of the lateral, upper and lower profiles and the average centre of gravity.

In the initial instruction phase, when data relating to known objects is gathered, such measurements, or some of them if they are sufficient to allow the identification of a specific object, are stored in the mass memory unit 26A of the control processor 5 and make up the comparison base against which the corresponding data obtained from the detections on the object to be identified are matched.

There are suitably provided several standards of comparison, among which the one offering the highest reliability of identification is to be chosen: whenever an answer is required in a very short time, it is advisable to choose a standard of comparison whereby only a limited number of quantities are compared, in relation to the objects to be identified, provided that these are necessary and sufficient for the identification.

The detections may be carried out by means of adjustable scanning, whereby as shown in Figure 3, a pair of arrays 6 and 6' are used, and the speed at which the object to be detected passes through them is calculated on the basis of the interval of time between the detection by the first array and the detection by the second array, and of the distance between them.

It is also possible to collect data related to an object which is static, or temporarily still, by arranging the array around it and moving it along, by operating a switch, over a distance which is greater than the size of the object in a direction normal to the plane of the sensors.

If the object to be detected is carried through by a conveyor, the speed of travel of the conveyor can be used to control the frequency at which detections are carried out.

To this end, on a shaft of the conveyor there is provided a signal emitter, or encoder, able to send out signals having a frequency equal or proportional to the rotating speed of the shaft; these signals, as shown in Figure 1 by reference numeral 29, are sent to a circuit 30, of the Schmitt trigger type, which sends out a square wave going to a frequency divider 31 generating a break signal 32 (encoder interrupt) which is sent to the interface adaptor 20 and orders the carrying out of successive detections at a frequency dependent on the speed of travel of the object through the array 1 of sensors. If the array is moving and the object still, the frequency of the detections can be controlled by an encoder operated by the movement of the array.

The emitters 9 and 11 can be fed continuously, this allowing a high speed in the full detection of each subsequent section of the object. This is particularly suitable for objects passing through the array of sensors at a high speed: in this case, however, the optical and mechanical structure of the array must be particularly accurate in order to avoid interference between adjacent pairs of sensors and receivers.

If the speed at which the object passes through the array is not crucial in relation to the time required for carrying out the detections at a frequency suitable to guarantee the desired resolution, each emitter can be operated at the same time as its corresponding receiver, by means of the multiplexer 24.

An example of a support structure for the sensors able to guarantee sufficient rigidity so as to avoid mistakes in the readings resulting from the structure becoming deformed, is shown in Figures 4, 5 and 6, in which optical type emitter and receiver pairs are used.

Figure 4 shows a pair consisting of an emitter 9 and a receiver 10, arranged in optical groups 33, 34, respectively, and supported by the frame 6 which, in the embodiment considered, is made of metal.

The optical group 33 consists of a converging lens 35, which is mounted on a support tube 36 secured with the required accuracy within a frame 6, carrying at the rear a plug 37 which provides a seat for an emitter 9: the length of the support tube 36 is such that the emitter 9 is placed in a focal position in relation to the lens 35.

Equally, the optical group 34 supported on frame 6 in line with the optical axis of group 33 so that the luminous beam originating from lens 33 shines with precision on it, consists of a converging lens 38, supported by the support tube 39 which carries at its end a plug 40 which provides a seat for the receiver 10; the receiver 10 is assembled at a distance which allows the luminous beam originating from the optical group 33 to focus on the whole sensitive surface of the receiver so that a maximum answering sensitivity is achieved.

Figure 5 shows the arrangement of the sensors, which are aligned and placed as close as possible to one another so that a high resolution of the detections carried out can be achieved.

As shown in Figure 6, in order to allow the optical groups of sensors to be at a distance able to ensure the required resolution, in relation to the characteristics of the object to be detected, it may be advisable to align the optical groups on two adjacent parallel rows, linking each emitter to its respective receiver, at a distance "d" which has no effect on the accuracy of detection carried out.

The optical alignment of the sensors may be achieved by accurate machining or by providing means for adjusting the alignment of each sensor.

At the installation stage, the apparatus according to the invention must be informed of the features of the various objects to be detected: to this aim, there is provided a learning period during which a number of objects for each class are made to pass through the array of sensors and the respective specific measurements, worked out from the detections carried out by the sensors, are stored in the memory to provide a data base relating to each of the classes of objects to be identified, against which the results of the detections carried out by the apparatus, in the operative stage, are matched.

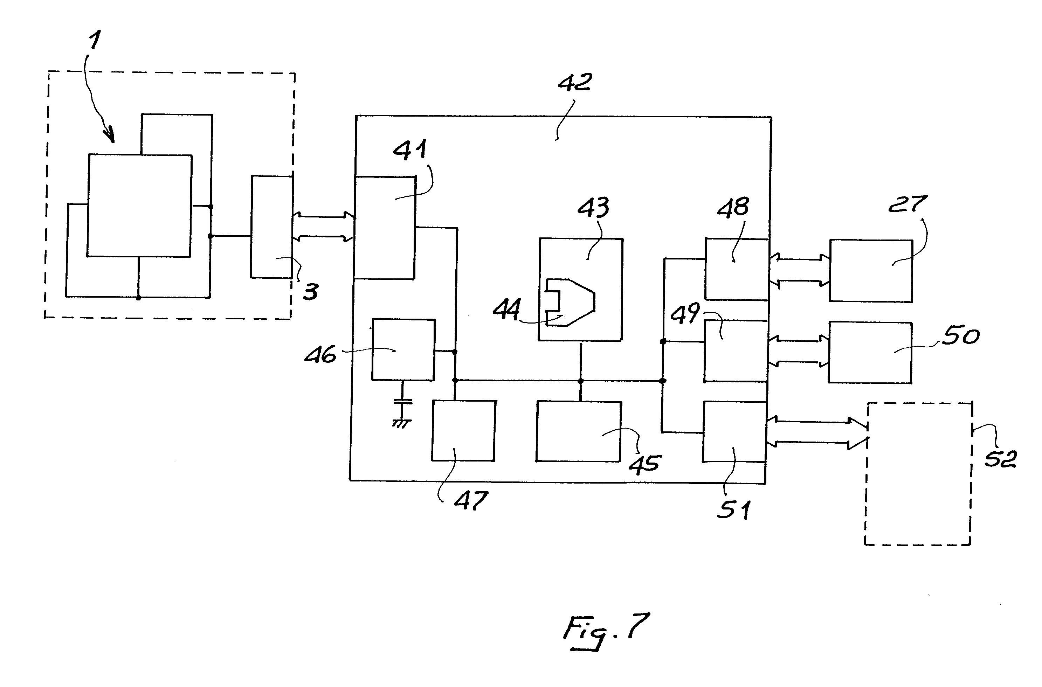

The computer 5 can be a small inexpensive commercial computer having suitable programmes for carrying out the required operations, or a microprocessor especially designed for a specific application. Figure 7 shows the block diagram of an apparatus using a specifically designed microprocessor: it comprises an array 1 of sensors, connected to an addressing unit 3; the addressing unit is connected, by means of an interface peripheral adaptor 41, to a microprocessor unit 42 comprising a CPU 43 having an arithmetical logical unit 44, connected to a ROM or EPROM 45, and a RAM 46, 47.

The CPU 43 is also connected, via the interface peripheral adaptors 48, 49 to the output unit 27 and to a dedicated communication unit 50, comprising keyboard for entering data and a display enabling, among other things, the initial stage of storage of the significant measurements related to known objects to be controlled: via a communication interface 51, the microprocessor unit 41 can also be connected to an outside computer 52, shown in the Figure by a broken line, in order to use the latter's bigger processing and storing facilities, if required.

The apparatus according to the invention can be used for various types of measurements and detections, being able to recognise identical objects belonging to a common class, dissimilar objects belonging to the same class, to determine the position of the centre of gravity of the object within the array, its orientation in space etc: it is also able to measure the size of an object and the speed of it. In particular, the apparatus according to the invention can be used to establish the speed of travel of moving objects in any position within the field to be scanned, thanks to the use of two arrays spaced one after the other.

Many variations can be introduced in manufacturing the apparatus in practice in order to meet the requirements of a specific application without departing from the scope of the invention in its general features.

## Claims

1. An apparatus for detecting the geometrical quantities of objects and automatically identifying them, characterised in that it comprises at least an array (1) of sensors, formed to provided an aperture within which an object (2) to be identified is placed, relative movement being possible between the object and the aperture, this aperture comprising a number of sensors (9), (11) arranged along two directions substantially at right angles within the plane of the aperture itself, able to detect the presence of an object moving along its operating path, such sensors being connected by means of an addressing unit (3) and an interface unit (4) to a computer controlled by a microprocessor (5) able to order that, at successive stages as the object goes through the aperture, there is gathered data related to the number and position of the array of sensors detecting the object, and to work out, from the data gathered, the resultant quantities to be used directly as the object quantities, the said microprocessor also being able to compare the above quantities with corresponding quantities stored in its memory and related to a number of known objects belonging to various classes of objects, to one of which the object under examination has to be attributed, and, depending on the result of the finding, to trigger outside units into operation.

2. An apparatus for detecting the geometrical quantities of objects and for automatically identifying them according to the previous Claim, characterised in that the array of sensors comprises a frame (6) forming a substantially rectangular window or aperture, along two contiguous sides of which there are arranged two fairly closely spaced rows of emitters, in a position relative to two reference axes in the plane of the frame, these rows of emitters each being faced, on the respective opposite sides of the window, by a respective row of receivers, whereby each sensor arrangement consisting of an emitter (9), (11) and its corresponding receiver (10), (12), in line with each other, sends different signals to said interface unit (4) depending on the presence or absence of an object on the path linking the emitter and the receiver of each sensor arrangement.

3. An apparatus for detecting the geometrical quantities of objects and for automatically identifying them according to Claim 2, characterised in that the sensor arrangements can be of the reflecting type combining the receiver and the emitter in one unit.

4. An apparatus for detecting the geometrical quantities of objects and for automatically identifying them, according to the previous Claims, characterised in that said addressing unit comprises at least a multichannel multiplexer (23) coupled to said receivers and to said interface unit for sequentially detecting the signals from the receivers.

5. An apparatus for detecting the geometrical quantities of objects and for automatically identifying them according to the previous Claims, characterised in that said addressing unit can include a multichannel multiplexer (24) coupled to said emitters and to the interface unit for sequentially activating the emitters in correspondence with their respective receivers.

6. An apparatus for detecting the geometrical quantities of objects and for automatically identifying them according to any one of Claims 1 to 4, characterised in that the emitters are connected to a continuous current feeder (24a) so that they can be simultaneously activated.

7. An apparatus for detecting the geometrical quantities of objects and for automatically identifying them according to the previous Claims, characterised in that the interface unit comprises an integrated circuit peripheral interface adaptor (20) connected to the control computer via a data bus (17), an address bus (18) and a control bus (19), and connected to said addressing unit via a data bus (15) and an address bus (16), linked to the multichannel demultiplexer, it being possible for the address bus also to be linked to said multichannel multiplexer.

8. An apparatus for detecting the geometrical quantities of objects and for automatically identifying them according to the previous Claims, characterised in that the data bus (15) and the address bus (16) linked to said addressing unit can be equipped with amplifier-separators (buffers) (21) and (22) for signal amplification.

9. An apparatus for detecting the geometrical quantities of objects and for automatically identifying them according to the previous Claims, characterised in that the computer controls the carrying out of a number of detections at frequent intervals during the time the object passes through the array of sensors.

10. An apparatus for detecting the geometrical quantities of objects and for automatically identifying them according to Claim 9, characterised in that the detections ordered by the computer are carried out at regular intervals.

11. An apparatus for detecting the geometrical quantities of objects and for automatically identifying them according to Claim 9, characterised in

**0 265 560**

that two arrays of sensors arranged one after the other at a pre-established distance are provided, in which case the interval of time between detection of the object by the first array of sensors and the corresponding detection by the second array is used to work out the value of the transit speed of the object and to determine the frequency at which the successive detections of the object by the second array are to be carried out.

12. An apparatus for detecting the geometrical quantities of objects and for automatically identifying them according to Claims 1 to 9, characterised in that whenever the relative movement between an object and an array of sensors is controlled by moving mechanical members, there is provided, linked thereto, an impulse generator having a frequency equal or proportional to the speed of advancement of the moving members (encoder) connected to the interface unit circuits by which signals ordering the carrying out of a detection are generated at a frequency proportional to the frequency of said impulse generator.

13. An apparatus for detecting the geometrical quantities of objects and for automatically identifying them according to the previous Claims, characterised in that the time gap between two successive detections of the object by the array of sensors, relative movement being possible between the object and the array, is such, in relation to the speed of travel of the object, to involve sections that are substantially at the same distance from each other as two contiguous sensors on said window.

14. A method for detecting the geometrical quantities of objects and for automatically identifying them according to the previous Claims, characterised in that said aperture consists of a frame (6) of metal that is not easily deformable, to whose sides the emitters and the receivers of the sensors are rigidly secured.

15. A method for detecting the geometrical quantities of objects and for automatically identifying them according to the previous Claims, characterised in that the object to be identified is made to pass through an array of sensors able to carry out a sequence of detections in the time it takes for the object to pass through, the results of such detections being then processed to provide quantities related thereto and such quantities being compared with corresponding quantities stored in the memory related to identical detections previously carried out on a number of known objects for each of the classes to which the object being investigated may belong, according to statistical rules chosen on the basis of a specific application involved, so that the object under examination may be attributed to one of such classes.

16. A method for detecting the geometrical quantities of objects and for automatically identifying them according to Claim 15, characterised in that the processing of each of the detections carried out takes place in the interval of time between one detection and the following.

Fig. 1

Fig. 2

Fig. 3

Fig. 4

Fig. 5

Fig. 6

Fig. 7

0 265 560

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 490 801  (HAGAN ENGINEERING) <br> * Column  3, line 51 - column 4, line 65; column 8, line 60 - column 9, line 29; column 13,  lines 18-58; figures * | 1,2,9-16 | G 01 B   11/00 <br> B 07 C    5/00 |
| X | GB-A-2 078 937  (GENERAL MINING UNION) <br><br> * Page 2, lines 76-77, line 98 - page 3, line 38; figures * | 1-5,7, 9,10, 12-16 | |
| X | GB-A-2 147 996  (SUNDBERG) <br><br> * Page 2, lines 15-114;  page  3, lines 5-123; figures * | 1,2,9-14 | |
| X | US-A-3 436 968  (FAIRBANKS MORSE) <br> * Figures;  column  4, line 63 - column 7, line 38 * | 1,2,14-16 | TECHNICAL FIELDS SEARCHED (Int. Cl.4) <br><br> G 01 B <br> B 07 C |
| X | GB-A-1 196 274  (FAIRBANKS MORSE) <br> * Figures * | 1-16 | |

The present search report has been drawn up for all claims

| Place of search | Date of completion of the search | Examiner |
|---|---|---|
| THE HAGUE | 26-06-1987 | RAMBOER P. |